# EUROPÄISCHE PATENTSCHRIFT

(11) **EP 3 670 176 B1**
(45) Veröffentlichungstag und Bekanntmachung des Hinweises auf die Patenterteilung: **24.03.2021**
(21) Anmeldenummer: 18213917.0
(22) Anmeldetag: 19.12.2018
(51) Int. Cl.: B32B 7/12, B32B 21/02, B32B 21/04, B32B 21/13, B32B 21/14, B32B 37/12, B32B 38/06, B32B 38/08, B32B 38/14

(54) **VERFAHREN ZUM HERSTELLEN EINES FURNIERTEN HOLZWERKSTOFFS UND HOLZWERKSTOFF AUS EINER TRÄGERPLATTE UND MINDESTENS ZWEI FURNIEREN**
METHOD FOR PRODUCING A VENEERED WOODEN MATERIAL AND WOODEN MATERIAL COMPRISING A SUPPORTING PLATE AND AT LEAST TWO VENEERS
PROCÉDÉ DE FABRICATION D'UN MATÉRIAU DÉRIVÉ DU BOIS CONTREPLAQUÉ ET MATÉRIAU DÉRIVÉ DU BOIS CONSTITUÉ D'UNE PLAQUE PORTEUSE ET D'AU MOINS DEUX FEUILLES DU CONTREPLAQUÉ

(43) Veröffentlichungstag der Anmeldung: 24.06.2020
(73) Patentinhaber: Flooring Technologies Ltd., Kalkara SCM1001 (MT)
(72) Erfinder: KALWA, Norbert, 32805 Horn-Bad Meinberg (DE)
(74) Vertreter: Kalkoff & Partner Patentanwälte mbB

(56) Entgegenhaltungen:
- EP-A1- 2 353 861
- EP-A1- 2 902 196
- WO-A1-2017/162926
- US-A1- 2011 162 308

## Beschreibung

Die Erfindung betrifft ein Verfahren zum Herstellen eines Holzwerkstoffs, bei dem eine Trägerplatte und mindestens zwei Furniere durch ein Kunstharz verbunden sind sowie eine Holzwerkstoffplatte, die mit mindestens zwei Furnieren beschichtet ist.

Holzwerkstoffe, die eine Furnieroberfläche aufweisen, sind z. B. aus der EP 2 902 196 A1 bekannt. Sie bestehen aus einem Holzwerkstoffträger (z. B. hochdichte Faserplatte HDF, OSB-Platte, Spanplatte), der mit einem Kunstharzauftrag versehen wird, der ein Furnier fixiert, indem das Kunstharz in das Furnier eindringt. Die verwendeten Furniere weisen meist eine Stärke von 0,8 mm bis 2,5 mm auf. Die Dokumente US 2011/162308 A1, WO 2017/162926 A1 und EP 2 353 861 A1 offenbaren ebenfalls furnierte Holzwerkstoffplatten und Verfahren zu ihrer Herstellung.

Furnierte Oberflächen sind als Echtholz-Oberflächen sehr geschätzt. Sie weisen eine angenehme Haptik auf und erzeugen angenehme akustische Verhältnisse. Furnierte Oberflächen werden als besonders hochwertig empfunden, wobei unter anderem die Dicke des aufgebrachten Furniers bewertet wird. Gleichzeitig sind Furniere, die sich als Deckschicht für Paneele eignen, der teuerste Bestandteil des Holzwerkstoffverbundes.

Es stellt sich daher die Aufgabe, einen Holzwerkstoff bereitzustellen, bei dem auf einer Trägerplatte auf kostengünstige Weise eine hochwertige Furnieroberfläche bereitgestellt wird.

Diese Aufgabe wird gelöst durch ein Verfahren nach Anspruch 1 und eine Holzwerkstoffplatte nach Anspruch 9. Die Unteransprüche beanspruchen besondere Ausführungen der Erfindung.

Das Verfahren zum Herstellen eines Holzwerkstoffs geht von einer Trägerplatte und einem ersten nicht-außenliegenden Furnier aus, die auf einer ersten Oberfläche der Trägerplatte miteinander durch ein Kunstharz verbunden sind. Erfindungsgemäß wird jedoch, abweichend zum Stand der Technik, mindestens ein zweites Furnier auf die erste Oberfläche der Trägerplatte aufgebracht. Das zweite Furnier wird auf das erste Furnier aufgebracht. Zum Verbinden von Trägerplatte und Furnier wird ein flüssiges Kunstharz im Überschuss auf Trägerplatte und/oder Furnier aufgebracht. Überschuss bezeichnet hier die Menge an Kunstharz, die, bezogen auf die zum Verleimen erforderliche Menge an Kunstharz, zusätzlich auf Trägerplatte und/oder Furnier aufgebracht wird. Dann wird das im Überschuss aufgebrachte Kunstharz getrocknet, aber nicht ausgehärtet. Trägerplatte und Furnier werden zu einem Pressgutstapel gefügt und der Pressgutstapel wird in einer Hochdruckpresse zu einem Holzwerkstoff verpresst.

Auf diese Weise kann zum einen eine dicke Furnierauflage erreicht werden, bei der ein erstes preiswertes Furnier und darauf ein hochwertiges, viel dünneres zweites Furnier eingesetzt wird, so dass eine hochwertige aber preiswerte Holzwerkstoffplatte mit Furnieroberfläche bereitgestellt wird. So kann z. B. durch Einsatz eines 1,5 mm dicken preiswerten Pappelfurniers als erstes Furnier und eines 0,6 mm starken, teuren Eichenfurniers eine Furnierauflage auf der Trägerplatte von 2,1 mm zu geringeren Kosten erreicht werden als bei Einsatz eines 2,1 mm Eichenfurniers. Die Dicke des mindestens einen zweiten Furniers beträgt bevorzugt das 0,15- bis 0,3-fache des ersten Furniers. Allgemein, bei Einsatz mehrerer Furniere beträgt die Dicke des äußersten Furniers, das im Zusammenhang mit dieser Erfindung auch als das zweite Furnier bezeichnet wird und das die sichtbare Oberfläche des Holzwerkstoffs bildet, das 0,15- bis 0,3-fache der unterhalb des äußersten Furniers angeordneten Furniere.

Des Weiteren können farblich unterschiedliche Furniere eingesetzt werden, so dass ein dunkleres zweites Furnier ein helleres erstes Furnier überdeckt. Durch partielles Abtragen des zweiten Furniers wird das erste hellere Furnier sichtbar, so dass z. B. der Eindruck einer Intarsienarbeit entsteht. Die vorstehend beschriebene Farbfolge ist nur eine mögliche Anordnung von mindestens zwei Furnieren auf der ersten Oberfläche einer Trägerplatte. Es versteht sich ausdrücklich, dass eine beliebige Folge farblich unterschiedlicher Furniere auf der ersten Oberfläche einer Trägerplatte angeordnet sein kann und dass bei mehr als zwei Furnieren das partielle Abtragen des ersten und zweiten Furniers einen ästhetisch ansprechenden Effekt bewirkt. Auch das Abtragen der Furniere bis auf die erste Oberfläche der Trägerplatte bewirkt auf preiswerte Weise einen ansprechenden ästhetischen Effekt. Eine typische Anwendung des partiellen Abtragens ist das Anbringen einer Fase am Übergang von der ersten Oberfläche einer Trägerplatte zu einer Seitenfläche. An dieser Stelle sind dann die Furniere nebeneinander sichtbar. Die vorstehend beschriebenen Oberflächengestaltungen muten hochwertig an. Sie können erfindungsgemäß preiswert und einfach bereitgestellt werden.

Eine Ausführung des erfindungsgemäßen Verfahrens sieht vor, dass mindestens drei, vier, fünf oder mehr Furniere auf die erste Oberfläche einer Trägerplatte aufgetragen werden. Es können beliebig viele Furniere übereinander auf die erste Oberfläche einer Trägerplatte aufgetragen werden. Das erfindungsgemäße Verfahren ist nur durch die Leistung der nachstehend erläuterten Presse beschränkt, die in der Lage sein muss, das im Überschuss aufgetragene, getrocknete Kunstharz durch die übereinander angeordneten Furniere hindurch zu erweichen und aushärten zu lassen. Des Weiteren können bei gleicher oder unterschiedlicher Dicke der aufeinander angeordneten ersten und mindestens zweiten Furniere an den Seitenflächen oder an Fasen der Trägerplatte Farbeffekte nach Art einer Multiplexplatte erzeugt werden, indem Furniere unterschiedlicher Farbe übereinander angeordnet werden. Je mehr Furniere übereinander angeordnet werden, desto ausgeprägter wird dieser Effekt.

Das erfindungsgemäße Verfahren funktioniert, wenn sämtliches Kunstharz auf eine Oberfläche der Trägerplatte oder eines Furniers aufgebracht wird. Bevorzugt wird das im Überschuss aufgetragene Kunstharz auf die erste Oberfläche der Trägerplatte oder eine Oberfläche des Furniers aufgebracht, die eine nicht-außenliegende Oberfläche ist, die also im Pressgutstapel bzw. im fertigen Holzwerkstoff nicht die äußere Oberfläche ist, die am Pressblech anliegt oder die die Oberfläche des Holzwerkstoffs darstellt. Es ist weiter bevorzugt, wenn das im Überschuss aufgetragene Kunstharz in mindestens zwei Teilmengen auf eine Oberfläche der Trägerplatte und/oder eines Furniers aufgetragen wird. Beispielsweise wird eine erste Teilmenge des im Überschuss aufgetragenen Kunstharzes auf die erste Oberfläche der Trägerplatte und die dem zweiten Furnier gegenüberliegende Seite des ersten Furniers oder auf die der Trägerplatte zugewandte Seite des ersten Furniers und die dem ersten Furnier zugewandte Seite des zweiten Furniers aufgetragen. Alternativ können beide Seiten des ersten Furniers jeweils mit einer Teilmenge des im Überschuss aufgetragenen Kunstharzes aufgetragen werden. Weitere Alternativen ergeben sich zwanglos. Der Vorteil des in Teilmengen aufgetragenen Kunstharzes ist es, dass die Verteilung des Kunstharzes -und damit die Bindung zwischen den Furnieren und der Trägerplatte- besonders schnell und gleichmäßig erreicht werden kann.

Das erfindungsgemäße Verfahren sieht vor, dass der Pressgutstapel in einer Hochdruckpresse, üblicherweise eine Durchlauf- oder Kurztaktpresse (KT-Presse), verpresst wird. Das bei Presstemperaturen wieder verflüssigte Kunstharz wird dabei in das weniger dichte Furnier gepresst; die meist dichtere Oberfläche der Trägerplatte nimmt weniger Kunstharz auf. Gleichzeitig wird das Furnier durch den Druck, den die Hochdruckpresse ausübt, komprimiert. Beide Effekte wirken synergistisch zusammen und steigern die Druckfestigkeit der Furnieroberfläche. Die nach dem Komprimieren höhere Dichte des Furniers ist ebenso ein Beitrag zu einer höheren Druckfestigkeit wie das mindestens abschnittsweise Durchtränken des Furniers mit Kunstharz. Beide Maßnahmen widersprechen den üblichen Maßnahmen zur Herstellung eines Holzwerkstoffs mit einer Furnieroberfläche. Zum einen wird üblicherweise Kunstharz, das nur zum Fixieren des Furniers auf der Trägerplatte dient, mit meist bis zu 100g/m² (bezogen auf 100%) Feststoff sparsam eingesetzt und zum anderen vermeidet man das Pressen in einer Hochdruckpresse, um ein Komprimieren des Furniers zu vermeiden. Es hat sich jedoch herausgestellt, dass das Aussehen und die Haptik des erfindungsgemäßen Holzwerkstoffs unverändert ästhetisch ansprechend sind.

Wesentliches Merkmal der Erfindung ist es, dass das Kunstharz, bezogen auf die zum Verleimen erforderliche Menge, im Überschuss eingesetzt wird, weil vorgesehen ist, dass das erneut verflüssigte Kunstharz beim Pressvorgang das Furnier teilweise durchdringt bzw. zwischen die Fasern des Furniers vordringt und dort aushärtet. Das Eindringen des Kunstharzes in das Furnier ist zum Fixieren des Furniers auf der Trägerplatte nicht erforderlich, dafür genügt ein oberflächlicher Kontakt mit dem Kunstharz. Der Überschuss beträgt, bezogen auf die zum Verleimen des Furniers erforderliche Menge an Kunstharz, mindestens 30%. Vorteilhaft beträgt die Menge an Kunstharz, die bei dem erfindungsgemäßen Verfahren eingesetzt werden, mehr als 50%, bevorzugt mehr als 100%, besonders bevorzugt mehr als 200% der zum Verleimen des Furniers erforderlichen Menge an Kunstharz.

Das Einbringen von Stoffen, die das Eindringen des Kunstharzes in das Furnier verzögern oder unterbinden, z. B. von Holzmehl, ist von Nachteil. Holzmehl wird eingesetzt, um das "Durchschlagen" von Kunstharz zu verhindern, also gerade das Eindringen von Kunstharz in das Furnier bis zur Furnieroberfläche. Ein aktuelles Beispiel hierfür ist die vorstehend beschriebene "Lindura" ® Platte. Die erfindungsgemäßen Mengenvorgaben können, ausgehend vom üblichen und bekannten Verleimen eines Furniers auf einer Trägerplatte und den dort eingesetzten Mengen an Kunstharz von üblicherweise bis 100 g/m² bezogen auf 100 % Feststoff, mit wenigen orientierenden Versuchen vom Fachmann ermittelt und optimiert werden.

Bereits mit Einsatz von 130 g/m² Kunstharz können erfindungsgemäß die positiven Effekte des erfindungsgemäßen Verfahrens und des erfindungsgemäßen Holzwerkstoffs wahrgenommen werden. Nach einer vorteilhaften Ausführung der Erfindung werden mindestens 150 g/m² Kunstharz eingesetzt, um Furnier und Trägerplatte zu verbinden sowie die Druckfestigkeit des Furniers zu steigern. Weiter bevorzugt werden mindestens 200 g/m², insbesondere mindestens 300 g/m², vorteilhaft bis zu 400 g/m² Kunstharz eingesetzt. Sämtliche Angaben zum Kunstharz im Zusammenhang mit dieser Erfindung beziehen sich auf 100% Feststoff. Das zweite Furnier soll in den meisten Anwendungen nur teilweise, ausgehend von der Trägerplatte bzw. dem ersten Furnier, mit Kunstharz getränkt sein. Die äußerste, von der Trägerplatte abgewandte Furnieroberfläche des mindestens zweiten bzw. äußersten Furniers ist in diesem Fall eine reine Holzoberfläche. Es ist aber auch ohne weiteres möglich, das erste und das mindestens zweite Furnier vollständig mit Kunstharz zu tränken, so dass das Kunstharz die äußerste, von der Trägerplatte abgewandte Furnieroberfläche des mindestens zweiten bzw. äußersten Furniers abdeckt.

Dieser Überschuss an Kunstharz ist, unabhängig davon, ob die gesamte Menge an Kunstharz oder Teilmengen aufgetragen werden, häufig nicht in einem Arbeitsgang bzw. in einer Schicht auf die Platte aufzubringen. Nach einer vorteilhaften Ausführung der Erfindung wird das flüssige Kunstharz in einer ersten und in einer zweiten Schicht aufgebracht, wobei optional das in der ersten Schicht aufgebrachte Kunstharz vor dem Aufbringen der zweiten Schicht getrocknet wird. Dieser Ablauf kann mehrfach wiederholt werden, z. B. wenn bis zu sechs oder mehr Schichten Kunstharz auf die Trägerplatte aufgebracht werden. Bei dem Trocknen des Kunstharzes ist darauf zu achten, dass zwar die Fließfähigkeit herabgesetzt oder gestoppt wird, dass jedoch die Reaktivität des Kunstharzes mindestens teilweise erhalten bleibt, so dass in der Presse eine Bindung zwischen Trägerplatte, Kunstharz und Furnier entsteht. Das Kunstharz wird also nach dem Auftragen in flüssiger Form getrocknet, aber nicht ausgehärtet. Das getrocknete Kunstharz kann klebrig sein. Grundsätzlich könnte das Kunstharz auch auf das Furnier aufgetragen werden, allerdings lässt es die geringe Festigkeit des Furniers in der Regel nur zu, eine Teilemenge des Kunstharzes aufzubringen.

Das Kunstharz kann auf Wunsch eingefärbt sein, so dass beim Eindringen des Kunstharzes in das Furnier optisch wahrnehmbare Effekte erzielt werden, entweder um im Zusammenwirken mit anderen Maßnahmen wie dem Bedrucken des Furniers eine hochwertigere optische Wirkung zu erreichen oder um z. B. bei einem besonders dünnen Furnier die Trägerplatte abzudecken. Häufig verwendete Farbtöne sind beige oder braune Farbtöne.

Zur Durchführung der Erfindung sind Kunstharze geeignet, die unter Druck und bei Einwirken erhöhter Temperatur, insbesondere unter den nachfolgend geschilderten Pressbedingungen zunächst verflüssigen und dann aushärten. Besonders typisch und geeignet ist Melaminharz. In das Melaminharz können bei Bedarf Korund oder andere, bekannte Zuschlagstoffe eingebracht sein, die z. B. die Abrieb- oder Kratzfestigkeit der Oberfläche verbessern. Auch Fasern, insbesondere Cellulosefasern, bevorzugt verhornte Cellulosefasern können zur besseren Schichtbildung in das Melaminharz eingebracht sein. Die zum Aufleimen von Furnier auf Trägerplatten üblicherweise verwendeten Harnstoff oder Polyvinylacetatleime eignen sich nicht gut für eine Verwendung in einer Hochdruckpresse, zum einen weil sie unter den dort herrschenden Druck- und Temperaturbedingungen nicht verflüssigen, in das Furnier eindringen und dort aushärten. Zum anderen ist z. B. Harnstoff nicht lichtecht und würde bei weitgehender Durchdringung des Furniers nach kurzer Zeit zu einem Vergilben führen.

Das Verpressen des Pressgutstapels erfolgt erfindungsgemäß in einer Hochdruckpresse. Eine übliche Furnierpresse zum Aufbringen von Furnieren auf Trägerplatten, die mit einem Pressdruck von 3 N/m² bis 5 N/m², einer Presstemperatur von bis zu 120 °C und einer Pressdauer von drei bis fünf Minuten arbeitet, ist nicht ausreichend, um in wirtschaftlicher Weise, insbesondere in vertretbarer Zeit die großen Mengen an Kunstharz zu verpressen und auszuhärten. Der Druck der Furnierpressen genügt außerdem nicht, um die Furniere zu komprimieren. Erfindungsgemäß wird daher vorgeschlagen, Hochdruckpressen wie z. B. Durchlaufpressen oder Kurztaktpressen einzusetzen, bei denen ein Pressdruck zwischen 25 N/mm² und 50 N/mm² eingestellt werden kann. Die Presszeit beträgt in einer Hochdruckpresse zwischen 20 Sekunden und 60 Sekunden. Die Presstemperatur beträgt zwischen 160 °C und 200 °C. Unter diesen, im Vergleich zu einer konventionellen Furnierpresse scharfen Bedingungen wird gewährleistet, dass das Kunstharz mindestens abschnittsweise in die Furniere eindringt, und dass die Furniere komprimiert werden.

In einem erfindungsgemäßen Holzwerkstoff sind eine Trägerplatte und ein erstes sowie ein mindestens zweites Furnier auf einer ersten Oberfläche der Trägerplatte durch Kunstharz miteinander verbunden, wobei die Furniere komprimiert sind und das Kunstharz mindestens das erste Furnier und mindestens 30% der Furnierstärke des mindestens zweiten Furniers durchdringt. Das erste Furnier muss dabei nicht über die gesamte Fläche, an der das erste und das zweite Furnier aneinander liegen, vom Kunstharz durchdrungen sein, sondern die Bereiche, in denen das erste Furnier von Kunstharz vollständig durchdrungen ist, müssen lediglich ausreichen, um das zweite Furnier mit dem ersten Furnier zu verbinden. Das Kunstharz durchdringt nach einer bevorzugten Ausführung mindestens 50% der Furnierstärke, vorteilhaft mindestens 70% der Furnierstärke, maximal jedoch 100% der Furnierstärke des mindestens zweiten Furniers. Diese Angaben beziehen sich auf die komprimierten ersten und mindestens zweiten Furniere.

Die ersten und mindestens zweiten Furniere werden nach einer weiteren Ausführung der Erfindung vorteilhaft um mindestens 30 % der ursprünglichen Stärke komprimiert, bevorzugt um mindestens 50% der ursprünglichen Stärke. Das Komprimieren des ersten und des mindestens zweiten Furniers muss nicht in gleichem Ausmaß erfolgen. Weisen das erste und das mindestens zweite Furnier eine unterschiedliche Dichte auf, werden die Furniere auch unterschiedlich verdichtet. Trotz des Komprimierens bleibt eine ästhetisch und haptisch ansprechende äußere, von der Trägerplatte abgewandte Furnieroberfläche erhalten. Versuche haben gezeigt, dass sich das Einbringen des, bezogen auf das einfache Verleimen, überschüssigen Kunstharzes unproblematisch gestaltet, weil das wieder verflüssigte Kunstharz beim Verpressen Luft aus dem Furnier verdrängt und in Zwischenräume zwischen den Holzfasern eindringt und dort ausgehärtet wird. Auf diese Weise bewirkt das eindringende Kunstharz eine Steigerung der Druckfestigkeit.

Die vorstehende Beschreibung zeigt die zahlreichen Vorteile des erfindungsgemäßen Verfahrens bzw. des erfindungsgemäßen Holzwerkstoffs. Das hier vorgeschlagene Verfahren ist mit bekannten Anlagen einfach und aufgrund der kurzen Pressdauer auch sehr wirtschaftlich durchzuführen. Versuche zum Profilieren des erfindungsgemäßen Holzwerkstoffs haben gezeigt, dass die Kantenbearbeitung auf einfache und präzise Weise durchgeführt werden kann; Ausrisse am Furnier, die nach einem Kantenschnitt für bekannte Furnierplatten leider üblich sind, kommen hier nicht vor. Der erfindungsgemäße Holzwerkstoff ist nicht nur für Wand- und Deckenplatten sondern auch für Fußbodenbeläge geeignet. Zudem lässt sich der Holzwerkstoff ausgezeichnet für Möbel oder Möbelteile mit beanspruchten Oberflächen einsetzen, ohne dass hier die Echtholzoberfläche aufgegeben werden muss. Hervorzuheben ist insbesondere die gute Beständigkeit gegen Feuchtigkeit, insbesondere, wenn das Kunstharz das Furnier zu mehr als 50% durchdringt.

Die Furnieroberfläche, das heißt die von der Trägerplatte wegweisende, sichtbare Oberfläche des äußeren bzw. des mindestens zweiten Furniers des Holzwerkstoffs kann vor oder während, insbesondere aber auch nach dem Verpressen einer Oberflächenbehandlung unterzogen werden. Insbesondere das erfindungsgemäße Prägen der Holzoberfläche, um reliefartige bzw. dreidimensionale Strukturen zu erhalten, die z. B. eine holzartentypische Porenstruktur verleihen, kann während oder nach dem Verpressen des Pressgutstapels durchgeführt werden. Aber auch das Bedrucken der Furnieroberfläche, z. B. um eine holzartentypische Färbung der Furnieroberfläche zu erreichen, kann erfolgen, vorzugsweise nach dem Verpressen des Pressgutstapels. Nach einer vorteilhaften Weiterbildung der Erfindung erfolgen das Prägen und das Bedrucken aufeinander bezogen, so dass ein synchrones Dekor entsteht, bei dem Farbgebung und -anordnung sowie Prägung aufeinander synchron abgestimmt sind. Das Prägen und Bedrucken kann insbesondere genutzt werden, um einem optisch wenig ansprechenden Furnier eine hochwertigere Anmutung zu geben oder um nebeneinander angeordneten Furnieren mit zu unterschiedlichem optischen Erscheinungsbild ein gleichmäßigeres Aussehen zu verleihen.

Die Furnieroberfläche, die ggf. bedruckt und/oder erfindungsgemäß geprägt ist, kann dann geölt oder lackiert werden. Ölen und Lackieren sind übliche Schutzmaßnahmen für Furnieroberflächen. Alternativ kann die ggf. bedruckte und/oder geprägte Furnieroberfläche auch mit einem Overlay, also einem kunstharzgetränkten Papier beschichtet werden, so wie es überwiegend für Laminatprodukte üblich ist. Die Pressbedingungen in einer Hochdruckpresse reichen aus, um ein Overlay auf der Furnieroberfläche zu fixieren.

Der Pressgutstapel kann nach einer weiteren Ausführung der Erfindung auch ein Underlay aufweisen, ein ggf. kunstharzgetränktes Papier oder Vlies, das beim Verpressen mit Trägerplatte und Furnier verbunden wird. Das Underlay wird üblicherweise zwischen Trägerplatte und erstem Furnier angeordnet, kann aber auch zwischen dem ersten und dem zweiten Furnier angeordnet sein. Ein Papier oder insbesondere ein Vlies, das z. B. mit einem Flächengewicht von 30 g/m² bis 50 g/m² eingesetzt wird, verleiht dem ersten und dem zweiten Furnier auf dem Holzwerkstoff gemäß der Erfindung eine weiter gesteigerte Druckfestigkeit, da das Vlies auf die Furniere einwirkende Druckkräfte verteilt und ableitet. Wirkt im Kugelfalltest gemäß DIN EN 13329 eine Kugel auf die Furnieroberfläche eines Holzwerkstoffs ein, hinterlässt die Kugel eine kleinere Kalotte, also eine geringere Verformung, wenn unter dem äußeren bzw. mindestens zweiten Furnier oder unter dem ersten Furnier ein Vlies oder ein Papier angeordnet ist. Ein Papier oder ein Vlies können sich auch dann als vorteilhaft erweisen, wenn das Furnier in kleineren Abmessungen verarbeitet wird als die Trägerplatte. Es vereinfacht das Fügen des Pressgutstapels wesentlich, wenn die Furnierstücke des ersten und/oder des zweiten Furniers vorab auf einem Papier oder Vlies gefügt und fixiert sind, das die Abmessungen der Trägerplatte aufweist. Der Verbund aus Papier oder Vlies und Furnierstücken kann dann auf einfache Weise mit der mit flüssigem, dann getrocknetem Kunstharz beschichteten Trägerplatte angeordnet werden.

Wird insbesondere unter dem mindestens zweiten Furnier bzw. dem äußersten Furnier des erfindungsgemäßen Holzwerkstoffs ein Vlies oder Papier angeordnet, so kann dieses Vlies oder Papier, das für sich genommen bereits wie vorstehend beschrieben eine Festigkeitssteigerung bewirkt, zusätzlich mit Additiven versehen werden, die z. B. die Entflammbarkeit, die Leitfähigkeit, die Resistenz gegenüber eindringender Feuchtigkeit, Pilzen, Insekten oder dergleichen verbessert. Alternativ kann auch das mindestens zweite bzw. äußerste Furnier mit solchen Additiven versehen werden.

Auf einer der mit aufeinander angeordneten ersten und zweiten Furnieren beschichteten ersten Oberfläche abgewandten Unterseite der Trägerplatte kann nach einer vorteilhaften Ausführung der Erfindung ein Gegenzug angeordnet werden, der für ausgeglichene Spannungsverhältnisse auf den beiden beschichteten Seiten der Trägerplatte sorgt. Der Gegenzug kann auf verschiedene Weise ausgeführt sein, z. B. durch Aufbringen eines harzgetränkten Papiers, durch eine Kunstharzschicht oder durch Aufbringen eines Furniers. Alternativ kann die Unterseite der Trägerplatte mit derselben oder einer vergleichbaren Folge von einem ersten und einem mindestens zweiten Furnier beschichtet sein, die mit im Überschuss aufgetragenem Kunstharz fixiert sind. Wird eine Kunstharzschicht als Gegenzug gewählt, kann sie optional mit Fasern versehen sein. Die Spannungen, die sich an der Oberfläche der Trägerplatte und ggf. im Furnier aufbauen, können durch Befeuchten ggf. reduziert werden. Da auch nach dem Trocknen des flüssigen Kunstharzes noch Wasser in den Pressgutstapel eindringen kann, bauen sich angesichts des Überschusses an Kunstharz und des darin enthaltenen Wassers vorteilhaft geringere Spannungen auf, so dass ggf. ein Holzwerkstoff ohne Gegenzug hergestellt werden kann bzw. der Gegenzug weniger Krafteinwirkung ausgleichen muss.

Als Trägerplatte kommen Holzwerkstoffplatten wie z. B. mineralisch oder mit Kunstharz gebundene Holzwerkstoffplatten, Spanplatten, OSB-Platten, HDF-Platten (hochdichte Faserplatten oder mitteldichte Faserplatten mit erhöhter Rohdichte) oder mitteldichte Faserplatten (MDF-Platten) in Frage, aber auch Sperrholzplatten, Furnierplatten, Stab- oder Stäbchenplatten oder Massivholzplatten können verwendet werden. Aufgrund des Überschusses an Kunstharz ist das erfindungsgemäße Verfahren tolerant gegenüber Unebenheiten der Plattenoberfläche, so dass auch Platten mit einer gröberen Oberflächenstruktur verwendet werden können.

Das erste und das mindestens zweite Furnier können ein Schälfurnier, eingesägtes Furnier oder ein Messerfurnier sein. Es kann ein bedrucktes oder ein geprägtes Furnier verwendet werden, es können aber auch auf Vlies oder Papier fixierte Furniere, insbesondere gefügte Furnierstücke verwendet werden.

Details der Erfindung werden an Hand von Ausführungsbeispielen näher erläutert. Es zeigen:
- Fig. 1: eine schematische Darstellung des erfindungsgemäßen Holzwerkstoffs
- Fig. 2: eine schematische Darstellung des vollständig von Kunstharz durchdrungenen ersten und zweiten Furniers
- Fig. 3: eine schematische Darstellung des vollständig von Kunstharz durchdrungenen ersten Furniers und des teilweise von Kunstharz durchdrungenen zweiten Furniers.

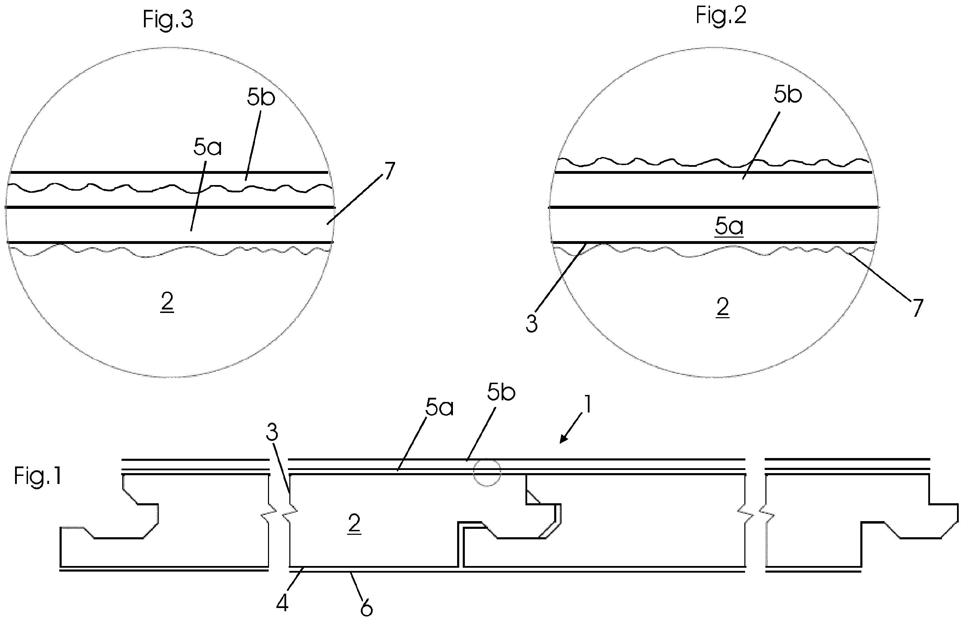

Fig. 1 zeigt eine schematische Darstellung des erfindungsgemäßen furnierten Holzwerkstoffs 1, hier einer Trägerplatte 2 mit zwei Furnieren auf einer ersten Oberfläche, der Oberseite 3. Die Trägerplatte 2 weist die Oberseite 3 und eine Unterseite 4 auf. Auf der Oberseite 3 ist ein erstes Furnier 5a und darüber ein zweites Furnier 5b angeordnet, auf der Unterseite 4 ist ein Gegenzug 6 angeordnet. Zwischen Trägerplatte 2 und erstem Furnier 5a ist eine Kunstharzschicht 7 angeordnet, wobei das Kunstharz 7 das erste Furnier 5a vollständig und das zweite Furnier 5b zu ca. 50% durchdrungen hat (vgl. Fig. 2). Fig. 3 zeigt eine Trägerplatte 2 mit einem ersten und einem zweiten Furnier 5a, 5b, die jeweils vollständig von Kunstharz durchdrungen sind.

Bei der Ausführung nach Fig. 1-3 wurde das gesamte, im Überschuss aufgetragene Kunstharz als Schicht 7 auf der Oberseite 3 der Trägerplatte 2 angeordnet. Es ist aber alternativ genauso möglich, das Kunstharz auf einer Furnieroberfläche des ersten oder des zweiten Furniers anzuordnen. Es wird dabei besonders bevorzugt, wenn das Kunstharz nicht auf der außenliegenden Oberfläche des äußersten, hier des zweiten Furniers 5b aufgetragen wird. Das Kunstharz kann zudem in mehreren Schichten sowohl auf der Trägerplatte als auch auf einem Furnier, z. B. auf der Oberseite 3 der Trägerplatte 2 und zwischen dem ersten und dem zweiten Furnier 5a, 5b aufgetragen werden. Das Auftragen in mehreren Schichten auf Trägerplatte und/oder Furnier bewirkt eine besonders gleichmäßige Verteilung des Kunstharzes.

Als Trägerplatte können sämtliche vorstehend beschriebenen Platten aus Holz oder Holzwerkstoffmaterial eingesetzt werden. Die nachfolgend gewählten HDF-Platten können ohne weiteres durch andere Plattentypen ersetzt werden. Als Furnier können sämtliche vorgenannten Furniere eingesetzt werden, die nachfolgend beispielhaft eingesetzten Furniere können jederzeit durch andere Furniertypen ausgetauscht werden. Sowohl für die Trägerplatten als auch für das Furnier können Platten- oder Furnierstärke oder die Dichte des Furniers variieren.

Zur Herstellung des erfindungsgemäßen Holzwerkstoffs sind nachfolgend Pressbedingungen spezifisch angegeben. Es ist anzumerken, dass dies nur ausgewählte Pressbedingungen sind, die vorstehend angegebenen Druck-, Temperatur- und Zeitintervalle erlauben ein Variieren der Pressbedingungen, beispielsweise eine Verkürzung der Presszeit bei erhöhtem Druck oder erhöhter Temperatur oder einer Erhöhung beider Parameter. Gleiches gilt für eine Senkung von Druck und/oder Temperatur mit einer einhergehenden Verlängerung der Pressdauer.

### Ausführungsbeispiel 1:

Auf eine erste Oberfläche einer großformatigen Trägerplatte, hier z. B. eine HDF-Platte (mitteldichte Faserplatte mit erhöhter Rohdichte, Format: 2800 x 2070 x 8 mm) wird ein Melaminharz aufgewalzt (75% Feststoff, Auftragsmenge: 300 g/m²). Dies wird z. B. durch Zugabe von Melaminharzpulver zu flüssigem Melaminharz (65 Gew.-%) hergestellt. Das auf die erste Oberfläche der Trägerplatte aufgebrachte Melaminharz wird in einem Umlufttrockner auf eine Restfeuchte von ca. 10 % getrocknet. Anschließend werden vier Furniere auf das getrocknete Melaminharz aufgelegt. Dabei handelte es sich abwechselnd um Eichen- und Birkenfurniere, jeweils mit einer gleichen Dicke von 0,6 mm. Der Aufbau wurde in einer Kurztaktpresse bei 200 °C, 400 N/cm² Pressdruck und 25 Sekunden Presszeit verpresst. Nach dem Pressen betrug die Dicke der Furniere insgesamt 1,8 mm. Mit einem Gitterschnitt wurde nach dem Abkühlen die Haftung der Furnierschichten aufeinander geprüft. Diese war in Ordnung, d.h., auch das äußerste Furnier war fest mit der Trägerplatte bzw. dem unter dem äußersten Furnier angeordneten Furnier verbunden. Danach wurden aus der großformatigen Platte Teilplatten im Format 2800 x 205 mm gesägt. An diese Teilplatten wurde ein Profil zur leimlosen Verlegung und eine umlaufende Fase angefräst. Nach der Verlegung war im sichtbaren Verbindungsbereich (der Fase) eine Multiplexoptik erkennbar.

### Ausführungsbeispiel 2:

Auf eine großformatige Trägerplatte, hier eine HDF-Platte (mitteldichte Faserplatte mit erhöhter Rohdichte, Format: 2800 x 2070 x 8 mm) wird ein Melaminharz aufgewalzt (75% Feststoff, Auftragsmenge: 300 g/m²). Dies wird durch Zugabe von Melaminharzpulver zu flüssigem Melaminharz (65 Gew.-%) hergestellt. Das Melaminharz wird in einem Umlufttrockner auf eine Restfeuchte von ca. 10 % getrocknet. Anschließend wird ein erstes Furnier, ein Birkenfurnier, auf das Melaminharz aufgelegt und ein zweites Furnier, ein Mahagonifurnier wird auf das erste Furnier bzw. Birkenfurnier aufgelegt. Das Mahagonifurnier hat eine Stärke von 0,5 mm und das Birkenfurnier hat eine Stärke von 1,5 mm. Der Aufbau wurde in einer Kurztaktpresse bei 200 °C, 400 N/cm² Pressdruck und 25 Sekunden Presszeit verpresst. Mit einem Gitterschnitt wurde nach dem Abkühlen die Haftung der Furnierschichten aufeinander geprüft. Diese war in Ordnung. Danach wurden aus der großformatigen Platte Teilplatten im Format 2800 x 205 mm gesägt. An diese Teilplatten wurde ein Profil zur leimlosen Verlegung angefräst.

Die so hergestellte Platte zeigt eine einwandfreie Mahagonioberfläche. Gegenüber einem 2 mm Mahagonifurnier als Alternative ist die erfindungsgemäße Platte deutlich preiswerter durch den Einsatz von preiswertem Birkenfurnier.

### Ausführungsbeispiel 3:

Auf eine großformatige Trägerplatte aus HDF (mitteldichte Faserplatte mit erhöhter Rohdichte, Format: 2800 x 2070 x 8 mm) wird ein Melaminharz aufgewalzt (75% Feststoff, Auftragsmenge: 300 g/m²). Dies wird z. B. durch Zugabe von Melaminharzpulver zu flüssigem Melaminharz (65 Gew.-%) hergestellt. Das Melaminharz wird in einem Umlufttrockner auf eine Restfeuchte von ca. 10 % getrocknet. Anschließend werden drei Furniere auf das Melaminharz aufgelegt. Dabei handelte es sich jeweils um Eichenfurniere mit einer Dicke von 0,7 mm. Über das erste, unterste Furnier wird ein Vlies aus Cellulosefasern mit einem Flächengewicht von 100 g/m², das mit leitfähigen Additiven, z. B. mit 2 Gew.-% bis 5 Gew.-% Carbonfasern oder Leitruß bezogen auf das Vlies ausgerüstet ist, gelegt. Darauf werden das zweite und das dritte Eichenfurnier gelegt. Der Aufbau wurde in einer Kurztaktpresse bei 200 °C, 400 N/cm² Pressdruck und 25 Sekunden Presszeit verpresst. Das Kunstharz verflüssigt sich in der Presse, es durchdringt die nicht-außenliegenden Furniere mindestens abschnittsweise vollständig und das äußerste Furnier mindestens teilweise. Mit einem Gitterschnitt wurde nach dem Abkühlen die Haftung der Furnierschichten aufeinander geprüft. Diese war in Ordnung.

Danach wurden aus der großformatigen Platte Teilplatten im Format 2800 x 205 mm gesägt. An diese Teilplatten wurde ein Profil zur leimlosen Verlegung angefräst und so ein Fußbodenelement hergestellt. In den unteren Bereichen des Profils, in denen sich die Schicht mit dem leitfähigen Vlies befindet, wird in regelmäßigen Abständen (alle 5 cm) ein Streifen aus Silberleitlack gesprüht, der die elektrische Leitfähigkeit erhöht. Nach Anlegen einer Spannung von 12 V lieferte das Fußbodenelement ca. 80 W/m².

Die so hergestellten Teilplatten weisen gegenüber gleichen Teilplatten ohne leitfähiges Vlies eine deutlich verbesserte Leitfähigkeit auf.

## Patentansprüche

1. Verfahren zum Herstellen eines Holzwerkstoffs (1) mit einer Trägerplatte (2) und mindestens einem ersten, nicht-außenliegenden Furnier (5a) und einem zweiten Furnier (5b) auf einer ersten Oberfläche (3) der Trägerplatte, wobei die Trägerplatte (2), das erste und das mindestens zweite Furnier (5a, 5b) miteinander durch Kunstharz (7) verbunden sind, wobei
- ein flüssiges Kunstharz (7) in einer Menge von mindestens 130 g/m², angegeben als 100% Feststoff, und damit, bezogen auf die zum Verleimen erforderliche Menge, im Überschuss auf die Trägerplatte (2) und/oder das erste Furnier (5a) und/oder das mindestens zweite Furnier (5b) aufgebracht wird,
- das im Überschuss aufgebrachte Kunstharz (7) getrocknet, aber nicht ausgehärtet wird,
- die Trägerplatte (2), das erste, nicht-außenliegende Furnier (5a) und das mindestens zweite Furnier (5b) zu einem Pressgutstapel gefügt werden und
- der Pressgutstapel in einer Hochdruckpresse bei einem Pressdruck von 25 N/mm² bis 50 N/mm², bei einer Presstemperatur zwischen 160 °C und 220 °C sowie einer Pressdauer von 20 Sekunden bis 60 Sekunden zu einem Holzwerkstoff (1) verpresst wird.

2. Verfahren nach Anspruch 1, **dadurch gekennzeichnet, dass** mindestens drei Furniere auf eine erste Oberfläche (3) der Trägerplatte (2) aufgebracht werden.

3. Verfahren nach Anspruch 1 oder 2, **dadurch gekennzeichnet, dass** eine erste Teilmenge des Kunstharzes (7) und mindestens eine weitere Teilmenge des Kunstharzes auf unterschiedliche Oberflächen der Trägerplatte (2) und/oder eines Furniers (5a, 5b) aufgebracht werden.

4. Verfahren nach mindestens einem der vorangehenden Ansprüche, **dadurch gekennzeichnet, dass** das Kunstharz (7), bezogen auf die zum Verleimen erforderliche Menge, mit einem Überschuss von mindestens 30%, bevorzugt von mindestens 50%, vorteilhaft von mindestens 100%, besonders bevorzugt von mindestens 200% eingesetzt wird.

5. Verfahren nach mindestens einem der vorangehenden Ansprüche, **dadurch gekennzeichnet, dass** das Kunstharz (7), jeweils angegeben als 100% Feststoff, in einer Menge von mindestens 150 g/m², bevorzugt von mindestens 200 g/m², vorteilhaft von mindestens 300 g/m², besonders bevorzugt von bis zu 400 g/m² auf die Trägerplatte (2) oder das Furnier (5a, 5b) aufgetragen wird.

6. Verfahren nach mindestens einem der vorangehenden Ansprüche, **dadurch gekennzeichnet, dass** das Furnier (5a, 5b) während des Verpressens um mindestens 30%, vorzugsweise um mindestens 50% der ursprünglichen Furnierstärke komprimiert wird.

7. Verfahren nach mindestens einem der vorangehenden Ansprüche, **dadurch gekennzeichnet, dass** eine äußere Furnieroberfläche des Holzwerkstoffs (1) einer Oberflächenbehandlung unterzogen wird, insbesondere geprägt, bedruckt, geölt oder lackiert wird.

8. Verfahren nach mindestens einem der vorangehenden Ansprüche, **dadurch gekennzeichnet, dass** eine äußere Furnieroberfläche des Holzwerkstoffs (1) geprägt und bedruckt wird, wobei Prägen und Bedrucken ein synchrones Dekor aus Prägung und Bedruckung erzeugen.

9. Holzwerkstoff erhältlich aus dem Verfahren nach einem der Ansprüche 1 bis 8, aufweisend eine Trägerplatte (2) und ein erstes sowie mindestens ein zweites Furnier (5a, 5b), die miteinander durch ein Kunstharz (7) verbunden sind, wobei das mindestens erste, nicht-außenliegende Furnier (5a) und das mindeste zweite Furnier (5b) in ihrer Furnierstärke komprimiert sind, wobei das Kunstharz (7) das erste Furnier (5a) zu mindestens 100 % der Furnierstärke durchdringt und das mindestens zweite Furnier (5b) zu mindestens 30% der Furnierstärke durchdringt, und wobei die Furnieroberfläche geprägt ist.

10. Holzwerkstoff nach Anspruch 9, **dadurch gekennzeichnet, dass** bei einem Holzwerkstoff (1), auf dessen erster Oberfläche (3) drei Furniere aufgebracht sind, das erste und das mindestens zweite Furnier zu 100 % der Furnierstärke von Kunstharz durchdrungen sind, und dass das dritte Furnier zu mindestens 30 % der Furnierstärke von Kunstharz durchdrungen ist.

11. Holzwerkstoff nach Anspruch 9 oder 10, **dadurch gekennzeichnet, dass** die Furnieroberfläche bedruckt ist.

12. Holzwerkstoff nach mindestens einem der Ansprüche 9 bis 11, **dadurch gekennzeichnet, dass** das erste Furnier (5a) und das zweite Furnier (5b) eine unterschiedliche Farbe aufweisen.

13. Holzwerkstoff nach mindestens einem der Ansprüche 9 bis 12, **dadurch gekennzeichnet, dass** eine zweite Oberfläche (4) der Trägerplatte (2) mit einem ersten und mindestens einem zweiten Furnier (5a, 5b) versehen ist, die durch ein Kunstharz (7) mit der Trägerplatte (2) verbunden sind.

## Claims

1. A method for producing a wooden material (1) using a supporting plate (2) and at least one first, non-external veneer (5a) and one second veneer (5b) on a first surface (3) of the supporting plate, wherein the supporting plate (2), the first and the at least second veneer (5a, 5b) are connected to one another by means of synthetic resin (7), wherein
- a liquid synthetic resin (7) is applied in an amount of at least 130 g/m², expressed as 100% solids, and thus in excess relative to the amount required for gluing, to the supporting plate (2) and/or the first veneer (5a) and/or the at least second veneer (5b),
- the synthetic resin (7) applied in excess is dried, but not cured,
- the supporting plate (2), the first, non-external veneer (5a) and the at least second veneer (5b) are joined to form a stack of products to be pressed, and
- the stack of products to be pressed is pressed in a high-pressure press at a pressing pressure of 25 N/mm² to 50 N/mm², at a pressing temperature of between 160°C and 220°C, and for a pressing time of 20 seconds to 60 seconds to form a wooden material (1).

2. The method according to claim 1, **characterized in that** at least three veneers are applied to a first surface (3) of the supporting plate (2).

3. The method according to claim 1 or 2, **characterized in that** a first partial amount of the synthetic resin (7) and at least one other partial amount of the synthetic resin are applied to different surfaces of the supporting plate (2) and/or a veneer (5a, 5b).

4. The method according to at least one of the preceding claims, **characterized in that** the synthetic resin (7), relative to the amount required for gluing, is used in an excess of at least 30%, preferably at least 50%, advantageously at least 100%, particularly preferably at least 200%.

5. The method according to at least one of the preceding claims, **characterized in that** the synthetic resin (7), in each case expressed as 100% solids, is applied to the supporting plate (2) or veneer (5a, 5b) in an amount of at least 150 g/m², preferably at least 200 g/m², advantageously at least 300 g/m², particularly preferably up to 400 g/m².

6. The method according to at least one of the preceding claims, **characterized in that** the veneer (5a, 5b) is compressed during pressing by at least 30%, preferably at least 50% of the original veneer thickness.

7. The method according to at least one of the preceding claims, **characterized in that** an outer veneer surface of the wooden material (1) is subjected to surface treatment, in particular embossed, printed, oiled or lacquered.

8. The method according to at least one of the preceding claims, **characterized in that** an outer veneer surface of the wooden material (1) is embossed and printed, embossing and printing producing a synchronous pattern of embossing and printing.

9. A wooden material that can be obtained from the method according to one of claims 1 to 8, comprising a supporting plate (2) and a first and at least one second veneer (5a, 5b), which are connected to one another by means of a synthetic resin (7), wherein the at least first, non-external veneer (5a) and the least second veneer (5b) are compressed in terms of their veneer thickness, wherein the synthetic resin (7) impregnates the first veneer (5a) to at least 100% of the veneer thickness and impregnates the at least second veneer (5b) to at least 30% of the veneer thickness, and wherein the veneer surface is embossed.

10. The wooden material according to claim 9, **characterized in that**, in the case of a wooden material (1) on the first surface (3) of which three veneers are applied, the first and the at least second veneer are impregnated by synthetic resin to 100% of the veneer thickness, and **in that** the third veneer is impregnated by synthetic resin to at least 30% of the veneer thickness.

11. The wooden material according to claim 9 or 10, **characterized in that** the veneer surface is printed.

12. The wooden material according to at least one of claims 9 to 11, **characterized in that** the first veneer (5a) and the second veneer (5b) have a different color.

13. The wooden material according to at least one of claims 9 to 12, **characterized in that** a second surface (4) of the supporting plate (2) is provided with a first and at least one second veneer (5a, 5b), which are connected to the supporting plate (2) by means of a synthetic resin (7).

## Revendications

1. Procédé de fabrication d'un matériau dérivé du bois (1) comprenant une plaque porteuse (2) et au moins une première feuille de contreplaqué (5a) non externe et une deuxième feuille de contreplaqué (5b) sur une première surface (3) de la plaque porteuse, dans lequel la plaque porteuse (2), la première et l'au moins une deuxième feuille de contreplaqué (5a, 5b) sont reliées entre elles par une résine synthétique (7), dans lequel
- une résine synthétique (7) liquide est appliquée en une quantité d'au moins 130 g/m², exprimée en matière solide à 100%, et donc en excès par rapport à la quantité nécessaire au collage, sur la plaque porteuse (2) et/ou la première feuille de contreplaqué (5a) et/ou l'au moins une deuxième feuille de contreplaqué (5b),
- la résine synthétique (7) appliquée en excès est séchée, mais pas durcie,
- la plaque porteuse (2), la première feuille de contreplaqué (5a) non externe et l'au moins une deuxième feuille de contreplaqué (5b) sont assemblées de manière à former une pile de matière à presser, et
- la pile de matière à presser est compressée en un matériau dérivé du bois (1) dans une presse à haute pression, à une pression de pressage de 25 N/mm² à 50 N/mm², à une température de pressage entre 160°C et 220°C et pour une durée de pressage de 20 secondes à 60 secondes.

2. Procédé selon la revendication 1, **caractérisé en ce qu'**au moins trois feuilles de contreplaqué sont appliquées sur une première surface (3) de la plaque porteuse (2).

3. Procédé selon la revendication 1 ou 2, **caractérisé en ce qu'**une première quantité partielle de la résine synthétique (7) et au moins une autre quantité partielle de la résine synthétique sont appliquées sur différentes surfaces de la plaque porteuse (2) et/ou d'une feuille de contreplaqué (5a, 5b).

4. Procédé selon l'une au moins des revendications précédentes, **caractérisé en ce que** la résine synthétique (7) est utilisée avec un excès d'au moins 30%, de préférence d'au moins 50%, avantageusement d'au moins 100%, de manière particulièrement préférentielle d'au moins 200%, par rapport à la quantité nécessaire au collage.

5. Procédé selon l'une au moins des revendications précédentes, **caractérisé en ce que** la résine synthétique (7), respectivement considérée comme une matière solide à 100%, est appliquée en une quantité d'au moins 150 g/m2, de préférence d'au moins 200 g/m2, avantageusement d'au moins 300 g/m2, de façon particulièrement préférentielle jusqu'à 400 g/m2 sur la plaque porteuse (2) ou la feuille de contreplaqué (5a, 5b).

6. Procédé selon l'une au moins des revendications précédentes, **caractérisé en ce que** pendant le pressage, la feuille de contreplaqué (5a, 5b) est comprimée à au moins 30%, de préférence à au moins 50% par rapport à l'épaisseur initiale de la feuille de contreplaqué.

7. Procédé selon l'une au moins des revendications précédentes, **caractérisé en ce qu'**une surface extérieure de la feuille de contreplaqué du matériau dérivé du bois (1) est soumise à un traitement de surface, en particulier gaufrée, imprimée, huilée ou peinte.

8. Procédé selon l'une au moins des revendications précédentes, **caractérisé en ce qu'**une surface extérieure de la feuille de contreplaqué du matériau dérivé du bois (1) est gaufrée et imprimée, le gaufrage et l'impression produisant une décoration synchrone constituée d'un gaufrage et d'une impression.

9. Matériau dérivé du bois pouvant être obtenu à l'aide du procédé selon l'une des revendications 1 à 8, présentant une plaque porteuse (2) et une première ainsi qu'au moins une deuxième feuille de contreplaqué (5a, 5b), lesquelles sont reliées entre elles à l'aide d'une résine synthétique (7), dans lequel l'au moins une première feuille de contreplaqué (5a) non externe et l'au moins une deuxième feuille de contreplaqué (5b) sont comprimées dans leur épaisseur de feuille de contreplaqué, dans lequel la résine synthétique (7) pénètre à au moins 100% de l'épaisseur de feuille de contreplaqué de la première feuille de contreplaqué (5a) et pénètre à au moins 30% de l'épaisseur de feuille de contreplaqué de l'au moins deuxième feuille de contreplaqué (5b), et dans lequel la surface de la feuille de contreplaqué est gaufrée.

10. Matériau dérivé du bois selon la revendication 9, **caractérisé en ce que** dans un matériau dérivé du bois (1) sur la première surface (3) duquel sont appliquées trois feuilles de contreplaqué, la première et l'au moins une deuxième feuille de contreplaqué sont imbibées de résine synthétique à 100% de l'épaisseur de feuille de contreplaqué, et **en ce que** la troisième feuille de contreplaqué est imbibée de résine synthétique à au moins 30% de l'épaisseur de feuille de contreplaqué.

11. Matériau dérivé du bois selon la revendication 9 ou 10, **caractérisé en ce que** la surface de la feuille de contreplaqué est imprimée.

12. Matériau dérivé du bois selon l'une des revendications 9 à 11, **caractérisé en ce que** la première feuille de contreplaqué (5a) et la deuxième feuille de contreplaqué (5b) présentent une couleur différente.

13. Matériau dérivé du bois selon l'une au moins des revendications 9 à 12, **caractérisé en ce qu'**une deuxième surface (4) de la plaque porteuse (2) est pourvue d'une première et d'au moins une deuxième feuille de contreplaqué (5a, 5b), lesquelles sont reliées à la plaque porteuse (2) à l'aide d'une résine synthétique (7).
